# EUROPEAN PATENT APPLICATION

(11) **EP 1 321 877 A1**
(43) Date of publication of application: **25.06.2003**
(21) Application number: 02080343.3
(22) Date of filing: 18.12.2002
(51) Int. Cl.: G06F 17/60

(54) **Addressing items to be mailed**

(30) Priority: 18.12.2001 NL 1019598
(71) Applicant: Neopost Industrie B.V., 9201 BX Drachten (NL)
(72) Inventor: Edens, Bertus Karel, 9204 JT Drachten (NL); Scheltes, René, 9203 VD Drachten (NL); Hidding, Gerhard, 8447 EJ Heerenveen (NL)
(74) Representative: Prins, Adrianus Willem

(57) **Abstract**

For addressing an item to be mailed, at least one initial address for delivery of the item is determined and then an addressing file containing addressing data clustered in address clusters is consulted. At least a number of the address clusters each contain at least two addresses. As the addresses are clustered and the selection of an address cluster is effected in response to agreement between an initial address for delivery of an item and an address occurring in the cluster, neither the sender nor the addressee needs to know a special identification code of the addressee. A system and a computer program for carrying out this method are also described.

## Description

### FIELD AND BACKGROUND OF THE INVENTION

This invention relates to a method, a system and a computer program for addressing an item to be mailed.

For automatically addressing items to be mailed, a great many solutions are known. An example of such solutions is the well known "mail merge" functions which make it possible to address a message with a number of addresses which are read from a database. Another example is address verification applications which automatically verify and correct addresses of items to be mailed. Also designed for addressing data to be mailed are applications that send e-mails to e-mail addresses on a list, with or without adapted text items, such as salutation and data associated with the addressee. However, these systems are only suitable for sending items utilizing a particular delivery technique.

For quite some time now, for the delivery of items in the form of messages to be sent by electronic route, so-called unified messaging systems, are known. In the use of such systems, messages in different forms, such as voice, e-mail, SMS and fax, can be sent to an exchange which sends the messages as well as any reports of messages in accordance with instructions and queries of the addressee. A drawback of this system is that for sending messages to participants in such systems, it is necessary to know the identification code under which the participant is known in the system.

U.S. patent specification 6,157,924 discloses methods and systems for addressing an item to be mailed, which make it possible to automatically choose a delivery medium for an item to be sent in accordance with the addressee's wishes as stored in a data file. A drawback of this system, however, is that the addressee must especially input his preferences and associated addresses for the respective type of messages. For the sender it is disadvantageous that he must store address files with a very great number of positions, which requires a great deal of storage capacity. In addition, keeping a relatively large file up-to-date requires either relatively many data input activities or accessibility of the addressees for inputting data.

### SUMMARY OF THE INVENTION

It is an object of the invention to provide a solution which, when addressing items, on the one hand provides for a great flexibility with respect to addressing and choice of medium, but on the other hand requires little input of data on the part of the sender and addressee, and also renders storing a large amount of address data at each sender superfluous.

According to the invention, this object is achieved by providing a method according to claim 1. For carrying out this method, the invention provides a system according to claim 16. Further, the invention provides a computer program according to claim 17, which makes it possible to carry out the method according to the invention utilizing universal equipment for processing data and for making messages and other items ready to be mailed.

As the addresses are associated into clusters, and the selection of an address cluster is effected in response to agreement between an initial address for delivery of an item and an address occurring in the cluster, neither the sender nor the addressee is required to know a special identification code of the addressee. Therefore, senders are not required to input and store identification codes associated with addressees before starting to utilize the system. Since for selecting address clusters, further, use is made of an initial address which is known at the sender, the item to be mailed can also be delivered when the initial address thereof does not occur in the collection of address clusters. As a result, items are delivered with great reliability, even if only a limited percentage of the addressees participates in the system.

Particularly advantageous elaborations of the invention are laid down in the dependent claims.

Further aspects, effects and details of the invention are illustrated and elucidated hereinafter on the basis of an exemplary embodiment with reference to the drawing.

### BRIEF DESCRIPTION OF THE DRAWING

Fig. 1 is a schematic overview of an example of a method according to the invention;
Fig. 2 is an overview of a modification of an initial address in accordance with data present in a selected address cluster;
Fig. 3 is a schematic overview of a system according to a second exemplary embodiment of the invention; and
Fig. 4 is a schematic overview of a system according to a third exemplary embodiment of the invention.

### DETAILED DESCRIPTION

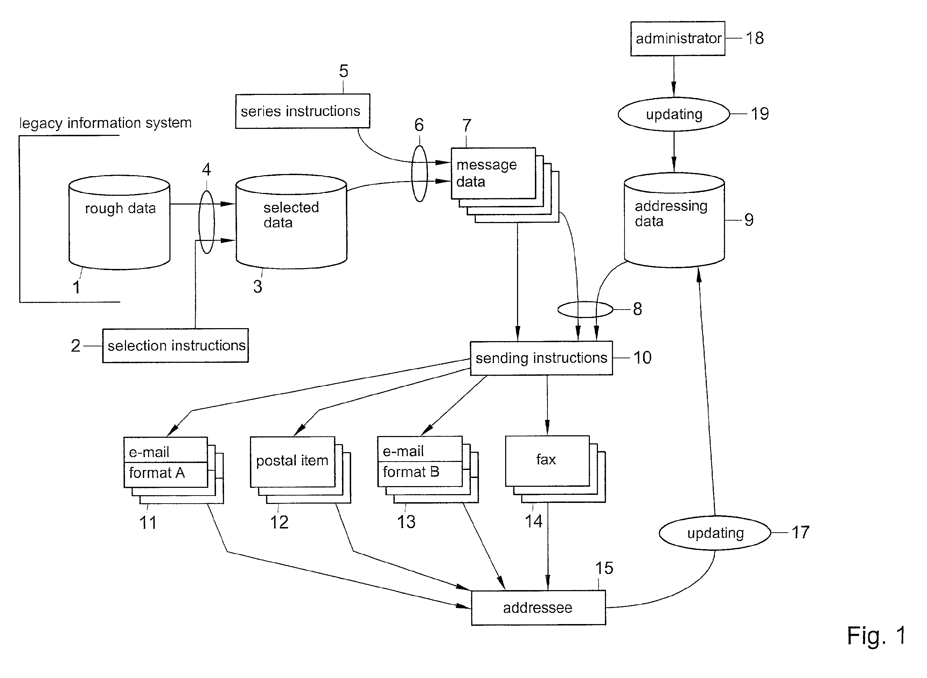

First, the invention is elucidated with reference to the example represented in Fig. 1. This example involves the automatic assembly of a series of items to be mailed, such as account statements.

Starting from data in the collection of rough data 1, in accordance with selection instructions 2, in a selection operation 4, a selection is made of data 3 to be represented at predetermined positions in the items to be mailed. In accordance with series-instructions 5 which apply to all items of the respective series of items to be mailed, in an assembling operation 6, a number of sets of message data 7 are assembled.

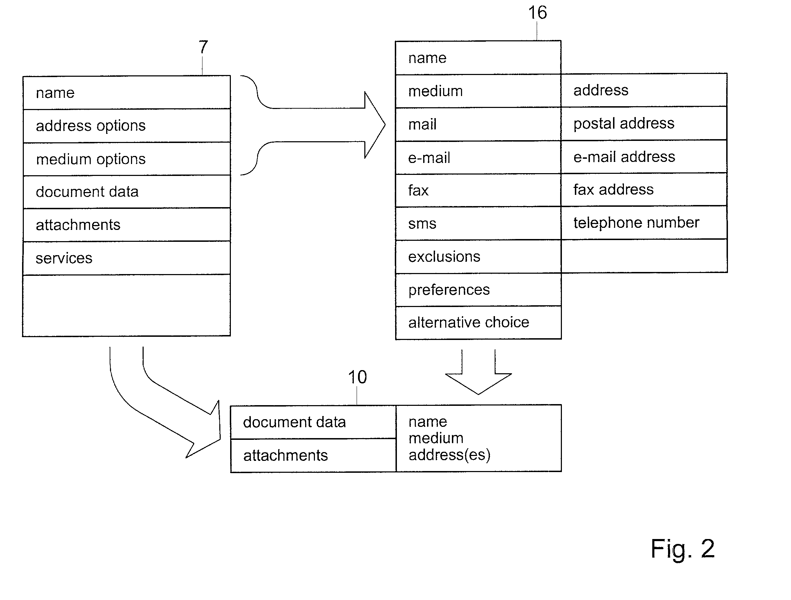

An example of a set of such message data 7 is represented in more detail in Fig. 2. According to this example, the sets of message data each comprise:
- the name of the addressee;
- address options containing initial addresses of the addressee;
- medium options containing delivery mediums selected for the delivery of the respective message associated with the addresses of the addressee and possibly indications relating to preferences;
- document data defining the contents such as text, layout and images of a document forming part of the message;
- attachment data defining which attachments form part of the respective message 7; and
- data relating to services to be coupled to the message, such as sending a notification via e-mail or SMS to the addressee that a message has been sent.

Naturally, each of the above-mentioned types of data can comprise several fields, such as, for the name, the fields "initials" and "family name", and for the address the fields "street name", "place of residence", "postal code", and "country". These data can, for instance, be stored as data provided with suitable labels in an XML file, in a data base or in a systematically built-up sequential file.

As represented in Fig. 1, subsequently, in an addressing post-operation 8, starting from the message data 7 containing initial addresses for the delivery of the respective items, and data in an addressing file 9, the eventual processing instructions 10 are composed with which mailing of the items to be mailed can be controlled. These controls can result, for instance, in the sending of e-mail messages 11 in a first format A, the sending of postal items 12, the sending of e-mails 13 in a second format B and the sending of faxes 14. Naturally, depending on the nature of the items to be mailed, more, fewer or other delivery mediums can be selected.

These messages 11 - 14 then each reach, by the associated procedure, the associated addressee 15.

In the addressing file, addresses have been associated into address clusters 16. An example of types of information that can be stored in such an address cluster 16 is represented in Fig. 2. The data stored in the address cluster according to this example are:
- the name of the addressee;
- medium options containing available delivery mediums for the delivery of items to the respective addressee (according to this example: mail, e-mail, fax and SMS), of which delivery mediums, for that matter, also unified messaging systems can form part,
- address options applying for the respective addressee, containing addresses via which items can be delivered at the addressee, which addresses of the addressee each belong to a delivery medium,
- exclusions of addresses,
- preferences for delivery mediums,
- forwarding instructions.

At least a number of the address clusters each contain at least two addresses, such as addresses for different delivery mediums and/or standard addresses and temporary addresses.

The automatic selection of an address cluster 16 from the addressing file 9 is effected in response to agreement between an initial address and data in the address cluster. The selection criterion can then require complete agreement or a particular minimum degree of agreement between an initial address and an address included in the address cluster. It is also possible to select the address cluster of which at least one address matches the initial address best. Thus, selecting an address cluster can be carried out without the sender or addressee having to know a special identification code of the addressee.

As can be further seen in Fig. 2, the address selected from the address cluster, together with the name and the medium choice, is included in the sending instructions which also contain the data concerning the document and the attachment coming from the initial data.

The item to be mailed is also delivered if the initial address thereof does not occur in the selection of address clusters.

If, for instance, a mailing is mailed, the proposed method can already be advantageously utilized if the file with addressing data 9 only contains addresses of a small part of the addressees. For instance, the addressing file 9 could only contain address clusters of addressees having stated to have moved or which cannot be reached at a particular address for a particular period of time such as a holiday, and an alternative address, for instance a holiday address or an address for receiving only reports of items sent to the addressee.

In case of lack of agreement or sufficient agreement between an initial address 7 and any address from any address cluster 16 in the addressing file 9, the item to be mailed is preferably addressed with the initial address. It can then still be addressed in the conventional manner.

As it is not necessary to know identification code for selecting address clusters, the method and the system and computer program according to the invention are eminently suited for use by different parties. This is because different senders will internally use different codes (such as client numbers, user numbers, patient numbers) for the same addressees. In many cases, small senders do not use any fixed codes for addressees at all, nor are they generally inclined to keep such codes up to date. If a method, system or computer program as proposed is used by different senders, this in turn offers the advantage that addressees' wishes relating to the delivery of items coming from different senders participating in a method as proposed only need to be stated by the addressees a single time.

If the address clusters are selected per home address, it is sufficient to include only address data in the initial address on the basis of which the address cluster is selected. If it is desired to couple the selection of an address cluster to persons or organizations, it is advantageous to carry out the selection of address clusters depending on name data as well. For instance, for automatically altering addresses in response to notified removals, agreement of name data will be desirable, because otherwise no distinction can be made between the addressee which has moved and those newly residing at the old address.

For instance, for processing data, prior to mailing, relating to removals and temporary availability at a different address, the selection of the address cluster thus takes place in response to agreement between the initial address and a first address of the address cluster, and the address from the selected address cluster which is selected for delivery of the item to be mailed is a second address which is different from the first address from the selected address cluster. Changing the address from an initial address to an address to be selected for mailing can, for that matter, also be advantageous if the selection of the address cluster is done on the basis of an addressee identification included therein which agrees with an identification associated with the item to be mailed, because it is rendered possible to provide the item with the proper address prior to mailing, and changing the address after the item has been sent is no longer necessary.

For applications such as the proposed automatic update of addresses to changes in the addresses of addressees, at least a number of the address clusters 19 contain blocked addresses, whereby the selection of at least one address cluster 16 is done in response to agreement between the initial address and the blocked address, and the blocking prevents selection of the blocked address from the address cluster for addressing the item to be mailed.

It is also possible, that of the addressing data, a number of the addresses are each blocked, for blocking the addressing of items to all addresses of the address cluster of the blocked address, for instance because the addressee to whom the address cluster belongs no longer exists. The blockings can also be selective, for instance if an addressee no longer wishes to receive any messages at all from particular senders or types of senders using the proposed method. For instance, there is a considerable group of persons who do not wish to receive any direct-mail at all. By processing the data concerning these persons as a correction to initial addresses in addressing the mailings, the most recent data concerning unwanted mailings can be taken into account in a highly flexible manner, without the senders having to modify their address data accordingly. If the blocking is coupled to particular types of items, for instance to standard advertising, the addressee can effect that, from the senders using the method, that particular type of item is no longer received, but that, conversely, other types of items are received.

The proposed method can advantageously be combined with address verification, for instance by checking address data which are entered in the address clusters, or by selecting address clusters and carrying out any modification of the address as an operation following or preceding address verification.

According to the example represented in Fig. 2, the initial address also contains data concerning delivery mediums which can be selected for delivery of the item, and the address cluster contains addresses for at least two delivery mediums. Selection of an address from the address cluster 16 then proceeds in response to agreement between the delivery medium determined according to the data 9 and the delivery medium associated with the selected address. Automatically selecting, before sending, a delivery medium depending on agreement between data relating to delivery mediums which are available to, or at least desired by, the sender, and data relating to delivery mediums via which the addressee can be reached or wishes to be reached, even if the selection of the address cluster does not proceed on the basis of agreement between one or more initial addresses and one or more addresses of the address cluster but, for instance, on the basis of agreement between or association with identification codes, offers the advantage that bringing the data in a form for a particular transmission is carried out directly from the data 7 which have been composed for sending the respective item. Conversion of data is therefore not necessary, which is advantageous in particular if sending as a physical postal item is a possibility.

If at least a number of the address clusters contain secondary addresses, and, in response to selection of a primary address, an additional item related to the item to be mailed is generated and is addressed with the secondary address, then, in response to instructions forming part of an address cluster, for instance automatic copy messages or reports of transmission to other addresses can be sent. For instance, when sending a parcel, automatically a spoken message can be sent by the sender to the telephone number of the addressee, in which message the expected time of delivery is communicated. In combination with blocking of the primary address (on which address clusters can still be selected), the secondary address can also form an alternative address to which mail is to be sent, for instance because the addressee has moved, is on holiday or for any other reason can be reached at a different address for some time.

Instructions for sending additional messages with secondary addresses can also be coupled to data relating to a sender, for instance if an addressee wishes that if messages are sent by particular senders participating in the proposed method, in addition a corresponding message is sent by e-mail.

By coupling secondary addresses to data relating to an item to be mailed, the addressee, for instance when particular types of items are sent by the sender, can have an electronic copy sent automatically to his e-mail address. If, for instance, insurance policies in each case are received by e-mail as well and are stored in a computer, an easy overview can be kept of the most up-to-date conditions of the insurance and when the associated physical documents are filed, accessibility needs to be taken into account less.

The blockings and secondary addresses can be coupled to a time limitation for limiting the activation of the blocking or secondary address. This makes it possible, for instance, to limit the modification of an instruction for changing an initial address to a different address given by the address cluster to the period of time one is reachable at the different address or to have it only start from the moment one has actually moved.

Addresses from the addressing file can also be coupled to a time limitation for limiting delivery of items with the address. This makes it possible for the sender of doorbell items (postal items and other parcels which do not fit into the letter box of the addressee) to indicate on the items, in encoded form or otherwise, specifications input by the addressee about periods of time within which doorbell items are preferably to be delivered, so that the delivering organization, in delivering the documents, can take this into account and items will less often be taken to the addressees in vain. Another possible application is that addressees can state that mail for particular addressees can or must only be delivered on a specific day. Thus, for the delivering organization, the number of addresses to be called at per delivering round is reduced, and for the addressee the advantage is achieved that mail of a particular type, at least when coming from senders utilizing the proposed method, only comes in on specific days, so that processing can be carried out more efficiently.

The addressing file 9 is preferably accessible to addressees 15 for updating 17 an address cluster 16 associated with the addressee. As a result, updates can be entered in a simple and rapid manner. In view of possible consequences of entering incorrect data, and the confidential nature of, for instance, data from which a temporary absence could be inferred, access to the addressing file is embedded within security measures known per se, and entered data are preferably verified automatically, for instance by verifying whether an entered address is an existing address, as is known per se. In addition, naturally, the addressing file is accessible in a manner known per se to an administrator for updating 19 and correcting data.

If, for instance, a secondary address forms part of one address cluster, which secondary address is also the primary address of another address cluster, a postal item might also be selected on the basis of the secondary address, and then be delivered in accordance with the addressing data of that address cluster, whereas the postal item was actually intended for the person for whom that secondary address is the primary address and who belongs to a different address cluster. This can be prevented by providing that addresses on the basis of which an address cluster may not be selected, are to be provided with a third party-indication, which third party-indication prevents the selection of the respective address cluster in response to agreement between the initial address and the address with the third party-indication.

For the automated collection of address data in a manner that automatically aims for addresses used by senders, it is possible, in response to the absence of an address cluster with an address being in agreement with the initial address, that a request for statement of address data is sent, addressed to the respective initial address.

In addition, it is also possible to supplement address clusters with data which senders have. To this end, if initial addresses contain several addresses associated with different delivery mediums, it is possible, in response to selection of an address cluster 16 in which at least one of the initial addresses of an item to be mailed is lacking, to supplement the addresses of the address cluster with the lacking addresses from the initial addressing data.

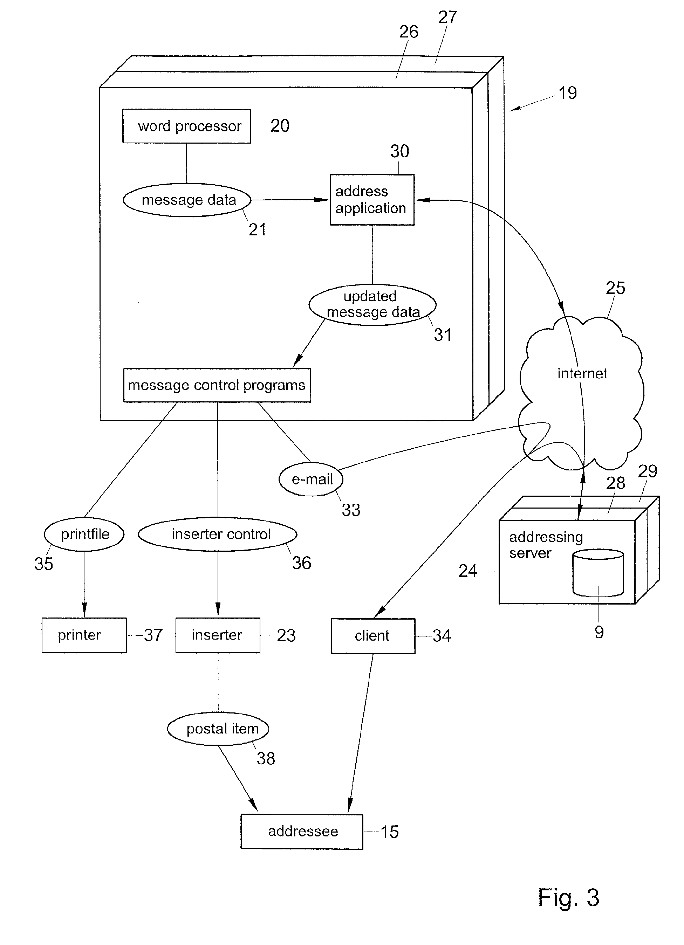

Fig. 3 represents a system for *inter alia* addressing an item to be mailed. The system comprises a client computer 19 with a processor 27 and a memory 26, having therein word processing software 20, message data 21 and addressing means in the form of control software 22 for providing a mail item with an address. The system further comprises a server 24 which is connected via Internet 25 with the client computer 19. The server 24 has a memory 28 and a data processor assembly 29.

According to this example, also an inserter system 23 and a printer 37 form part of the addressing means.

The memory of the server 24 comprises a file 9 with addresses associated into address clusters, instructions for reading an initial address for an item to be mailed, instructions for selecting an address cluster in response to agreement between the initial address and at least one of the associated addresses of the address cluster and instructions for selecting an address from the address cluster. The memory 27 of the client computer 19 contains an address program 30 for reading the initial address of the item to be mailed, for sending the initial address to the server 24, for receiving the selected address provided with the selected item, and for controlling therewith the control programs 22 for providing the item to be mailed with the selected address.

In operation, a user having a subscription to the service arranged on the server 24 in a word processing application or a different application for generating documents with address data (these can also be labels for parcels) can include the address in the electronic document in a form such that it can be selected and read by the address application. The address application then sends the address via internet to the server 24 which selects the associated address cluster 16 and determines data relating to the address and choice of delivery medium in accordance with the initial address data and the address data according to the selected address cluster. These determined data are then sent by the server 24 to the client computer 19 and there processed by the application into the message data yielding updated message data 31 which, in turn, are sent to the respective one of the control programs 22.

When, for instance, e-mail has been selected as delivery medium, the control program 22 controls an adapter or modem for sending an e-mail message 33 to a client computer 34 of the addressee 15. When mail has been selected as delivery medium, then according to this example a print file 35 and inserter control data 36 are sent to the printer 37 and the inserter 23, respectively. In accordance with the print file 35, the printer 37 prints a document which is subsequently finished by the inserter system 23 in accordance with the inserter control data 36. Thus, a postal item 38 is obtained, which is sent to the addressee, for instance by mail.

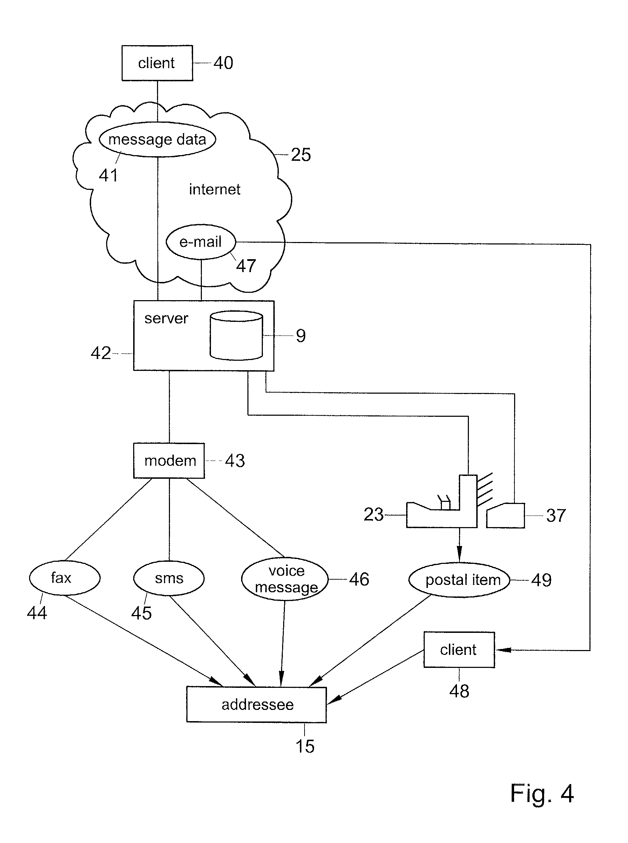

Fig. 4 represents a further example of a system containing computers coupled to each other via Internet 25. According to this example, the message data 41 are sent to a server 42 via Internet 25. According to this example, the server 42 is provided with a memory. In this memory, a file 9 with addresses associated into address clusters is stored. Further stored in this memory are: instructions for reading the initial address of the item to be mailed, instructions for selecting an address cluster in response to agreement between the initial address and at least one of the associated addresses of the address cluster, instructions for selecting an address from the address cluster, and instructions for controlling control programs for providing the item to be mailed with the selected address as well as the control programs for controlling the apparatuses for sending, or at least making ready for sending, the item to be mailed (the modem 43 and the inserter system 23).

When a user having a subscription to the service offered via the server 24 wishes to send a message, he sends the message data 41 via Internet 25 to server 42. The address data are then supplied such (for instance separately, marked or to be found on the basis of a specified location in the document) that they are separately readable. Then, starting from the initial address, in a corresponding manner as described hereinabove, the eventual address of one or more items to be mailed is determined.

With this address, the message can then be sent by control software to a modem 43 so as to be sent in the form of, for instance, a fax message 44, an SMS message 45 or a voice message 46, via the public telephone system and possibly via mobile telephony, to the addressee 15.

The server can send the message also as an e-mail 47 via Internet 25 to a client computer 48 of the addressee 15. In this case, it may be elected to send the message by mail, in which case a print file is sent to the printer 37 and finishing instructions are sent to the inserter system 23. After the document printed by the printer 37 has been finished, yielding a postal item 49, this postal item is delivered by mail. If the server 24 is connected to several printers-inserter combinations at different locations, the advantage is achieved that postal items can be composed as close to the addressee as possible, so that the transport of physical postal items is strongly reduced.

Within the framework of the invention, many embodiments other than the above-described embodiments are possible. For instance, instead of Internet, a separate network, or a network covering a large area (LAN or WAN) can be used, using or not using telecommunication facilities of third parties.

## Claims

1. A method for addressing an item to be mailed, comprising:
determining at least one initial address for delivery of the item;
consulting an addressing file containing addressing data clustered in address clusters, wherein at least a number of said address clusters each contain at least two addresses;
automatically selecting an address cluster from said addressing file in response to agreement between said at least one initial address and data in that address cluster;
automatically selecting an address from the address cluster; and
addressing the item to be mailed with the selected address.

2. A method according to claim 1, further comprising the determination of at least one delivery medium for delivering the item, while at least a number of said address clusters each contain addresses for at least two delivery mediums, while the selection of an address from the address cluster proceeds in response to agreement between the determined delivery medium and the delivery medium to which the selected address belongs.

3. A method according to claim 1 or 2, wherein:
selecting the address cluster proceeds in response to agreement between said at least one initial address and a first address of said address cluster, and
the address from the selected address cluster which is selected for delivery of the item to be mailed is a second address, different from said first address from said selected address cluster.

4. A method according to claim 3, wherein at least a number of said address clusters contain blocked addresses, while the selection of at least one address cluster proceeds in response to agreement between said at least one initial address and the blocked address, and wherein the blocking prevents selection of the blocked address from the address cluster for addressing the item to be mailed.

5. A method according to claim 4, wherein at least a number of said addresses are each blocked for blocking addressing of items to all addresses of the address cluster of the said blocked address.

6. A method according to any one of the preceding claims, wherein at least a number of said address clusters contain secondary addresses, and wherein, in response to selection of a primary address, an additional item related to said item to be mailed is generated and is addressed with said secondary address.

7. A method according to any one of claims 4 - 6, wherein at least one of said blockings and secondary addresses is coupled to data relating to a sender.

8. A method according to any one of claims 4 - 7, wherein at least one of said blockings and secondary addresses is coupled to data relating to an item to be mailed.

9. A method according to any one of claims 4 - 8, wherein at least one of said blockings and secondary addresses is coupled to a time limitation, for limiting the activation of said blocking or secondary address.

10. A method according to any one of the preceding claims, wherein at least one address from said addressing file is coupled to a time limitation for limiting delivery of items with said address.

11. A method according to any one of the preceding claims, wherein said addressing file is accessible to addressees for updating an address cluster associated with the addressee.

12. A method according to any one of the preceding claims, wherein, in case of lack of agreement between said at least one initial address and an address from an address cluster in said addressing file, the item to be mailed is addressed with said at least one initial address.

13. A method according to any one of the preceding claims, wherein at least one of said address clusters contains at least one address with third party-indication, which third party-indication prevents selection of the respective address cluster in response to agreement between said at least one initial address and the address with third party-indication.

14. A method according to any one of the preceding claims, wherein in response to the lack of an address cluster with an address being in agreement with said at least one initial address, a request for statement of address data is sent having as address said initial address or one of said initial addresses.

15. A method according to any one of the preceding claims, wherein said at least one initial address contains several addresses associated with different delivery mediums and wherein, in response to selection of an address cluster in which at least one of the initial addresses of an item to be mailed is lacking, the addresses of said address cluster are supplemented with said lacking initial address.

16. A system for addressing an item to be mailed, comprising:
a data processor structure;
addressing means for providing an item to be mailed with an address; and
a memory structure coupled to the data processor assembly, containing:
- a file containing addresses associated into address clusters;
- instructions for reading an initial address for an item to be mailed;
- instructions for selecting an address cluster in response to agreement between the initial address and at least one of the associated addresses of said address cluster;
- instructions for selecting an address from the address cluster; and
- instructions for controlling the addressing means for providing the item to be mailed with the selected address.

17. A computer program in a form readable by a data processor structure, comprising:
- instructions for reading an initial address for an item to be mailed;
- instructions for selecting an address cluster from a data file in response to agreement between the initial address and at least one of the associated addresses of said address cluster; and
- instructions for selecting an address from the address cluster.

18. A data processor system comprising a data processor assembly and a memory coupled to the data processor assembly, containing a computer program according to claim 17.
